**Europäisches Patentamt**

**European Patent Office**

**Office européen des brevets**

(19)

(11) Numéro de publication: **0 192 517**

**B1**

(12)

# FASCICULE DE BREVET EUROPÉEN

(45) Date de publication du fascicule du brevet:
**10.05.89**

(21) Numéro de dépôt: **86400137.5**

(22) Date de dépôt: **23.01.86**

(51) Int. Cl.⁴: **G 01 F 11/02, A 21 C 5/04**

```
┌─────────────┐
│  E R R A T U M │
└─────────────┘
```

(SEITE, SPALTE, ZEILE)
(PAGE, COLUMN, LINE)
(PAGE, COLONNE, LIGNE)

DIE TEXTSTELLE :
TEXT PUBLISHED :
LE PASSAGE SUIVANT :

LAUTET BERICHTIGT:
SHOULD READ :
DEVRAIT ETRE LU :

| | | | | |
|---|---|---|---|---|
| revendications à 16, | 8 | 13 | 49/50 | revendications 13 à 16, |

| | | |
|---|---|---|
| Tag der Entscheidung über die Berichtigung ) Date of decision on rectification: ) Date de décision portant ) sur modification: ) | **06.12.89** | Ausgabe- und Ver- öffentlichungstag: ) Issue and publication ) date: ) Date d'edition et de ) publication: ) |

| | |
|---|---|
| **07.02.90** | Patbl.Nr) **90/0** |
| | EPB no:) ........ |
| | Bull. no:) |

## Europäisches Patentamt

## European Patent Office

## Office européen des brevets

(11) Numéro de publication: **0 192 517**
**B1**

# FASCICULE DE BREVET EUROPÉEN

(45) Date de publication du fascicule du brevet:
**10.05.89**

(21) Numéro de dépôt: **86400137.5**

(22) Date de dépôt: **23.01.86**

(51) Int. Cl.⁴: **G 01 F 11/02, A 21 C 5/04**

(54) **Dispositif de dosage, notamment pour produits alimentaires.**

(30) Priorité: **28.01.85 FR 8501122**
**22.10.85 FR 8515659**

(43) Date de publication de la demande:
**27.08.86 Bulletin 86/35**

(45) Mention de la délivrance du brevet:
**10.05.89 Bulletin 89/19**

(84) Etats contractants désignés:
**DE FR GB IT**

(56) Documents cité:
**DE-A-2 213 783**
**DE-B-1 095 533**
**US-A-2 827 207**
**US-A-3 850 345**

(73) Titulaire: **Torterotot, Roland, Le Plessis Mornay,**
**F-78730 Longvilliers (FR)**

(72) Inventeur: **Torterotot, Roland, Le Plessis Mornay,**
**F-78730 Longvilliers (FR)**

(74) Mandataire: **Ahner, Francis, CABINET REGIMBEAU**
**26, avenue Kléber, F-75116 Paris (FR)**

EP 0 192 517 B1

LIBER, STOCKHOLM 1989

## Description

La présente invention concerne un dispositif de dosage apte à délivrer un volume déterminé de produit, en particulier de produits alimentaires.

Dans le cas particulier de produits alimentaires, les produits à doser peuvent être indifféremment constitués par des produits pâteux homogènes ou par des produits hétérogènes se présentant sous la forme de morceaux noyés dans un milieu liquide interstitiel de viscosité variable. Pour assurer leur conditionnement, ces produits doivent être dosés de façon aussi précise que possible et éjectés directement dans un conteneur approprié, notamment des boîtes de conserve, pots ou récipients analogues dans lesquels ils seront ultérieurement conservés.

Dans la technique antérieure, et en particulier dans le domaine de l'industrie alimentaire, on connaît déjà un certain nombre de dispositifs conçus pour délivrer des quantités dosées de produit. Ces dispositifs connus se présentent généralement sous la forme de pompe doseuse faisant intervenir l'action d'un piston doseur animé d'un mouvement de va et vient. De telles pompes doseuses sont souvent associées à un boisseau dont la rotation permet l'ouverture et la fermeture de la chambre du piston pour assurer respectivement l'alimentation, puis le prélèvement et l'évacuation du produit dosé.

Ainsi, la chambre du piston se trouve obligatoirement alimentée de façon discontinue, ce qui entraîne un certain nombre d'inconvénients, principalement une limitation des cadences de conditionnement de produit. En outre, les pompes doseuses de type à piston doseur donnent généralement naissance à un phénomène de coup de bélier qui rend difficile, voire impossible, la régularité du dosage, surtout dans le cas de produits hétérogènes et/ou de produits contenant des inclusions de bulles d'air.

La présente invention a précisément eu pour but de résoudre les problèmes énoncés ci-dessus. Le dispositif de dosage selon l'invention a en outre été conçu pour permettre une alimentation permanente en produit à doser, sans qu'à aucun endroit du dispositif et qu'à aucun moment du processus de dosage, il ne s'exerce des pressions importantes sur le produit.

Un dispositif ayant les caractéristiques techniques telles qu'énoncées dans le préambule de la présente revendication 1 est connu du document US-A-2 827 207.

Conformément à la présente invention, le dispositif de dosage apte à délivrer un volume déterminé de produit, en particulier de produits alimentaires, comprend:

- une chambre de dosage cylindrique de section circulaire et d'axe sensiblement horizontal, qui présente à sa partie supérieure une ouverture débouchant dans un réservoir surmontant ladite chambre de dosage et rempli de produit à doser, et qui communique avec un canal de sortie;

- une palette s'étendant radialement le long d'un arbre coaxial à la chambre de dosage, apte à être animée d'un mouvement de rotation d'amplitude contrôlée, au cours duquel l'extrémité libre de la palette balaie la surface intérieure cylindrique de la chambre de dosage;

ledit dispositif étant caractérisé en ce qu'il comprend en outre:

- un tiroir qui se déplace périodiquement, dans le canal de sortie, entre une position haute d'obturation et une position basse de fin de dosage;
- un volet mobile en translation apte à pénétrer périodiquement dans la chambre de dosage pour en constituer une paroi en contact tangentiel avec ledit arbre, puis à s'en extraire pour autoriser une révolution complète de ladite palette.

Les mouvements du volet, de la palette et du tiroir sont en outre commandés de façon interdépendante, avantageusement par des motoréducteurs eux-mêmes pilotés par un calculateur à microprocesseur.

Selon un mode de réalisation de l'invention, la commande interdépendante des mouvements du volet, de la palette et du tiroir est réalisée de manière que:

* en début de dosage:
 - la palette (26) occupe une position d'origine en regard de la surface intérieure cylindrique (32) de la chambre de dosage (10),
 - le volet (34) occupe une position basse de fermeture de la chambre de dosage (10) par contact tangentiel avec l'arbre (28),
 - le tiroir (20) occupe la position haute dans laquelle il obture le canal de sortie (18) juste au-dessus du niveau de la communication (24) entre chambre de dosage (10) et canal de sortie (18);
* en cours de dosage:
 - le volet (34) reste en position basse,
 - le tiroir (20) reste en position haute, et
 - la palette (26) est animée d'un mouvement de rotation d'amplitude limité prédéterminé, évacuant ainsi au travers du canal de sortie (18) la quantité de produit déplacé par la rotation de la palette (26);
* en fin de dosage:
 - le volet (34) reste en position basse,
 - la palette (26) reste immobilisée dans sa position de fin de rotation, et
 - le tiroir (20) coulisse en position basse pour évacuer le reste de la quantité de produit dosé se trouvant dans le canal de sortie (18).

Entre deux opérations successives de dosage:
* le volet occupe une position haute à l'extérieur de la chambre de dosage,
* la palette poursuit sa rotation pour revenir dans sa position d'origine, puis

* le volet est ramené dans sa position basse, et
* le tiroir revient en position haute d'obturation.

D'autres caractéristiques et avantages de l'objet de la présente invention apparaîtront à la lecture de la description détaillée faite ci-après, notamment en regard des figures annexées sur lesquelles:

la figure 1 représente une vue partielle en coupe du dispositif de dosage selon l'invention,
- la figure 2 représente une vue de côté du dispositif de dosage de la figure 1,
- les figures 3a à 3d illustrent schématiquement le fonctionnement du dispositif selon l'invention, et
- les figures 4a à 4c illustrent schématiquement le fonctionnement d'une variante du dispositif précédent, qui présente une structure simplifiée et qui permet de diminuer la durée d'un cycle de dosage pour une même quantité de produit, respectivement en position de début de dosage, de fin de dosage, et de retour à la position initiale entre deux opérations successives de dosage.

Sur les différentes figures annexées, les éléments correspondants portent des références identiques.

Le dispositif de dosage selon la présente invention comporte tout d'abord une chambre de dosage cylindrique 10 de section circulaire et d'axe sensiblement horizontal. Cette chambre de dosage 10 est entièrement remplie du produit à doser 12, et ce pendant toutes les phases du dosage. A sa partie supérieure, la chambre de dosage 10 présente une ouverture 14 débouchant dans un réservoir 16 surmontant ladite chambre 10. Le réservoir 16 est également entièrement rempli de produit à doser 12. Ce réservoir peut être monté de façon étanche sur le corps de la chambre de dosage par un moyen approprié quelconque, par exemple par boulonnage, avec interposition de joints d'étanchéité.

La chambre de dosage 10 communique en outre avec un canal de sortie 18 dans lequel se déplace un tiroir 20 qui est apte à coulisser périodiquement entre une position haute d'obturation et une position basse de fin de dosage. Selon une caractéristique avantageuse d'un mode de réalisation de la présente invention, l'extrémité supérieure 22 du canal de sortie 18 débouche également dans le réservoir 16. Ce canal de sortie s'étend de préférence selon une direction verticale et se trouve de préférence placé au voisinage immédiat de la chambre de dosage 10.

La communication entre la chambre de dosage 10 et le canal de sortie 18 est établie par l'intermédiaire d'un conduit 24 qui est de préférence incliné par rapport à l'horizontal dans le sens de rotation de la palette 26.

Cette palette 26 qui s'étend radialement le long d'un arbre 28 coaxial à la chambre de dosage 10, est apte à être animée d'un mouvement de rotation d'amplitude contrôlée. Au cours de sa rotation, l'extrémité libre 30 de la palette 26 vient balayer la surface intérieure cylindrique 32 de la chambre de dosage 10.

Le dispositif de dosage selon l'invention comporte également un volet 34 mobile en translation et apte à pénétrer périodiquement dans la chambre de dosage puis à s'en extraire. Lorsque le volet 34 occupe la position basse dans la chambre de dosage 10, il assure la fermeture de cette chambre par contact tangentiel avec l'arbre 28. Il est prévu que le volet 34 puisse ensuite s'extraire à nouveau de la chambre de dosage 10 de manière à autoriser une révolution complète de la palette 26, ce qui permet à cette dernière de revenir dans sa position d'origine.

Sur le mode de réalisation particulier décrit, on constate que l'extrémité inférieure 36 du volet 34 est biseautée de manière à définir une arête tranchante qui, en position basse du volet 34, dépasse sensiblement la ligne de contact tangentiel avec l'arbre 28. Cette arête tranchante permettra donc de couper les éventuels morceaux de produit rencontrés par le volet 34 lors de son déplacement en direction de l'arbre 28. De façon analogue, le tiroir 20 se présente sous la forme d'un piston dont les surfaces d'extrémité sont munies d'arêtes coupantes 38. Lors du déplacement du tiroir, soit vers le bas, soit vers le haut, il est ainsi possible de sectionner les morceaux de produit qui seraient immobilisés au voisinage du conduit de communication 24.

Le tiroir 20 est commandé dans son déplacement en translation par l'intermédiaire d'une tige 40 qui traverse le réservoir 16 rempli du produit à doser. De façon avantageuse, la tige de commande 40 du tiroir 20 présente une section transversale inférieure à celle du canal de sortie 18, de manière à autoriser un refoulement du produit 12 vers le réservoir 16 lorsque ledit tiroir occupe sa position basse. On observera en outre que dans cette position basse, l'extrémité inférieure du tiroir 20 dépasse le niveau de l'ouverture inférieure du canal de sortie 18, de manière à assurer l'éjection complète de la quantité de produit à doser qui est restée dans le canal de sortie.

On observera également que la tige 42 de commande de mouvement du volet 34 traverse le réservoir 16, tout comme la tige 40. Le déplacement des deux tiges 40 et 42 assure ainsi une sorte de brassage du produit 12 remplissant le réservoir 16 et favorisant ainsi l'alimentation continue par gravité de la chambre de dosage 10.

Les tiges de commande 40 et 42 traversent le réservoir 16 par un couvercle supérieur 44 dans lequel sont montés les joints d'étanchéité 46. Au-delà du couvercle 44 les tiges 40 et 42 se prolongent à l'intérieur d'une chambre stérile 48 destinée à protéger le produit contre toute forme de contamination résultant du coulissement des tiges 40 et 42. A l'extérieur de cette chambre stérile 48, les extrémités de tige sont par exemple couplées à des motoréducteurs classiques appropriés, non représentés sur les dessins.

Le réservoir 16 se touve alimenté en permanence par un bac tampon 50 dosposé à un niveau supérieur à celui du réservoir 16, la communication étant assurée par l'intermédiaire d'un conduit de raccordement 52. Le bac tampon 50 contenant le produit à doser doit être placé à un niveau suffisamment haut pour assurer un bon remplissage du réservoir 16. Il est également possible dans la pratique d'envisager un dispositif additionnel surmontant le bac tampon et exerçant sur le produit à doser une légère pression favorisant l'alimentation du réservoir 16.

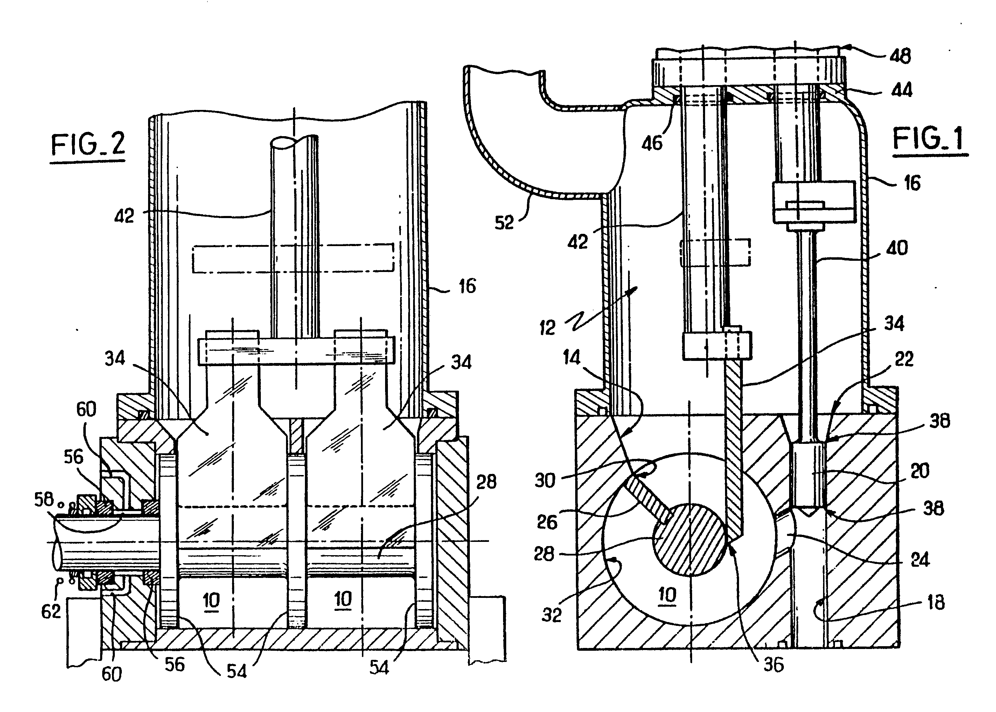

La figure 2 illustre un mode de réalisation particulier du dispositif de dosage selon l'invention, comportant deux chambres de dosage 10 disposées de façon adjacente. Il est bien entendu parfaitement possible de multiplier le nombre de ces chambres de dosage en fonction des besoins. Sur la figure 2, on constate que les deux chambres adjacentes représentées sont en fait délimitées par des joues 54 solidaires de l'arbre 28. Ce dernier est monté dans le corps du doseur à l'ai de de bagues d'étanchéité 56 disposées de part et d'autre d'une chambre annulaire stérile 58 parcourue par de l'air stérile circulant au travers des conduits 60. Les bagues d'étanchéité 56 sont soumises à l'action de la force exercée par le ressort 62.

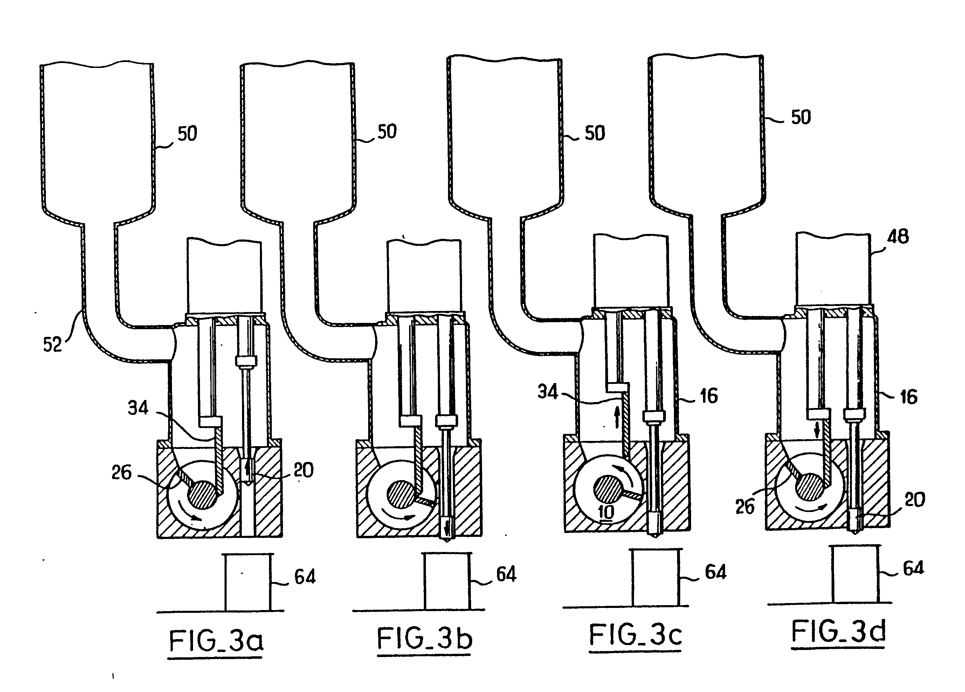

De manière à bien faire comprendre le mode de fonctionnement du dispositif de dosage précédemment décrit, les figures 3a à 3d illustrent la position des principaux organes du dispositif au cours des étapes essentielles du dosage.

La figure 3a correspond au début du dosage. A ce moment, la palette 26 cccupe sa position d'origine qui se trouve obligatoirement en regard de la surface intérieure 32 de la chambre de dosage 10. Cette position d'origine peut par exemple être celle représentée sur la figure 3a c'est-à-dire que la palette 26 arrive au ras de l'ouverture 14 de la chambre 10. Toujours dans cette première position, le volet 34 occupe sa position basse venant ainsi fermer la chambre de dosage 10 par contact avec l'arbre 28. Enfin, le tiroir 20 occupe sa position haute d'obturation, interdisant ainsi toute communication entre la chambre 10 et le réservoir 16.

La figure 3b correspond à la fin de l'opération de dosage. On constate qu'entre ces deux étapes, le volet 34 est resté en position basse et que la palette a tourné d'un angle prédéterminé en évacuant ainsi au travers du canal de sortie 18 une certaine quantité de produit déplacé au cours de sa rotation. Il est clair qu'en cours de dosage le tiroir 20 reste en position haute pour éviter un retour du produit 12 vers le réservoir 16.

Après immobilisation de la palette 26, dans sa position de fin de dosage, le tiroir 20 coulisse en position basse pour évacuer le reste de produit se trouvant dans le canal de sortie. Au cours de cette phase ultime d'éjection du produit, le volet 34 est resté en position basse.

La figure 3c illustre le retour des différents organes à leur position d'origine pour procéder à un nouveau dosage. Tout d'abord le volet 34 doit bien sûr s'extraire de la chambre de dosage 10, de manière que la palette 26 puisse revenir dans sa position d'origine en poursuivant sa rotation. On observera qu'à ce stade, le tiroir 20 est resté dans sa position basse. Ensuite, le volet 34 redescend pour fermer la chambre de dosage 10 et, au cours de ce mouvement, il est amené à déplacer une certaine quantité de produit à doser se trouvant dans la chambre. Etant donné que le tiroir 20 occupe toujours sa position basse, une communication entre la chambre de dosage 10 et le réservoir 16 est alors permise. Par suite, le déplacement du volet 34 ne va pas comprimer la matière à doser 12 qui peut s'échapper par le conduit 24 et être recyclée dans le réservoir 16.

Ensuite lorsque le volet 34 occupe sa position basse de fermeture de la chambre de dosage 10, et avant le début de la rotation de la palette 26 le tiroir 20 revient dans sa position haute d'obturation.

On constate ainsi que le dispositif doseur selon l'invention présente par rapport aux dispositifs de la technique antérieure des avantages déterminants. C'est ainsi que le dispositif doseur selon l'invention se trouve alimenté sans aucune difficulté de façon permanente. Le produit à doser se trouve délivré sans qu'aucune pression notable ne s'exerce sur la pâte en un endroit quelconque du dispositif. En outre, le produit se déplace essentiellement par gravité, ce qui rend possible le dosage de certains produits hétérogènes qu'il était quasiment impossible de doser de façon exacte avec les dispositifs antérieurs, tels que des produits foisonnés ou encore des produits hétérogènes du type salade de fruits.

Lors de la description précédente du fonctionnement du dispositif, il est apparu que les différents organes en mouvement dans le réservoir 16 engendrait un brassage du produit par ailleurs soumis à une circulation du fait du retour d'une certaine quantité de produit dans le réservoir par le canal de sortie 18. Le produit à doser se trouve donc continuellement renouvelé et il est important de noter qu'il n'existe aucun recoin borgne où l'on pourrait observer une stagnation du produit, phénomène tout aussi gênant pour des produits stériles que pour des produits non stériles, ces derniers étant susceptibles de subir alors des dégradations notamment d'origine bactérienne.

La conception même du dispositif selon l'invention permet, sans aucune difficulté, de modifier les doses de produit à délivrer ainsi que le passage d'un type de produit à un type différent.

Pour effectuer le nettoyage de l'ensemble du dispositif et en particulier de la chambre de dosage 10, il suffit de ramener le volet 34 dans sa position haute, puis d'alimenter le dispositif avec un liquide de lavage approprié et d'animer l'arbre 28 portant la palette 26 d'un mouvement de rotation permanent.

La conception même du dispositif de dosage selon l'invention permet avec une très grande certitude de délivrer toujours un même volume de produit. Le dosage est bien entendu réglable par simple variation de la course de rotation de la palette 26. L'amplitude maximale de la rotation de la palette correspond aux deux positions limites illustrées sur les figures 3a et 3b. Il est clair que toutes les positions intermédiaires peuvent être choisies pour délivrer des fractions de la dose maximale.

Lorsque la densité du produit à doser est susceptible de varier en cours d'utilisation, le dispositif selon l'invention permet très facilement d'ajuster le dosage. En effet, le produit dosé est délivré dans un récipient 64 qui peut être soit placé directement sur un dispositif de pesage automatique, soit être transféré à un tel dispositif. Toutes les variations de poids ainsi enregistrées, suite à des changements de densité, sont ainsi directement transmises à l'ordinateur de commande qui calculera la correction à apporter et transmettra l'information correspondante au motoréducteur commandant la rotation de l'arbre 28. Une telle correction se traduit bien sûr par une modification de l'amplitude de rotation utile de la palette 26 au sein de la chambre de dosage 10.

Conformément à une variante intéressante du dispositif de dosage selon l'invention, le volet et le tiroir sont réalisés en un organe mobile unique pouvant se déplacer périodiquement entre une position haute d'obturation dans laquelle une face verticale dudit organe est en contact tangentiel avec l'arbre portant la palette, et une position basse de fin de dosage, ledit organe mobile étant par ailleurs conformé pour permettre, dans ladite position basse, le passage de la palette poursuivant sa rotation pour revenir dans sa position d'origine.

Avantageusement, l'organe mobile unique présente une surface incurvée, sensiblement cylindrique, se raccordant à la face verticale, ladite surface incurvée étant balayée par l'extrémité libre de la palette lorsque celle-ci revient dans sa position d'origine.

Il est également intéressant que la palette présente une face active se raccordant tangentiellement à l'arbre support, ladite face active étant, en fin de dosage, essentiellement verticale pour prolonger la paroi correspondante du canal de sortie.

Pour s'assurer d'une éjection complète de la quantité du produit, il est bon que, en position basse, l'organe mobile unique dépasse le niveau de l'ouverture du canal de sortie.

De préférence, la tige de commande de l'organe mobile unique traverse le réservoir de produit, pour protéger le produit contre toute forme de contamination.

Pour un dosage répétitif fiable, compatible avec des cadences élevées, il est avantageux que les mouvements de la palette et de l'organe mobile unique soient réalisés par des motoréducteurs pilotés par un calculateur à microprocesseur.

Selon une conception préférée du dispositif, la commande interdépendante des mouvements de la palette et de l'organe mobile unique est réalisée de manière que:

- en début de dosage: la palette occupe une position d'origine prédéterminée en regard de la surface intérieure cylindrique de la chambre de dosage, et l'organe mobile unique est en position haute d'obturation, dans laquelle sont assurées d'une part la fermeture de la chambre de dosage par contact tangentiel avec l'arbre, et d'autre part la communication entre chambre de dosage et canal de sortie;
- en cours de dosage: l'organe mobile unique reste en position haute d'obturation, tandis que la palette est animée d'un mouvement de rotation d'amplitude prédéterminée évacuant ainsi au travers du canal de sortie la quantité de produit correspondante;
- en fin de dosage: la palette est immobilisée dans sa position de fin de rotation, puis l'organe mobile unique coulisse en position basse pour terminer l'évacuation du produit, et laisser la palette poursuivre sa rotation jusqu'à sa position d'origine.

En particulier, en fin de dosage, la palette est immobilisée dans une position telle que sa face active soit verticale, ladite face active pouvant alors être raclée au coulissement de l'organe mobile unique vers la position basse de celui-ci.

Une très bonne précision dans le dosage pourra en particulier être obtenue si le retour de l'organe mobile unique en position haute d'obturation n'est réalisé que lorsque la palette a atteint sa position d'origine prédéterminée.

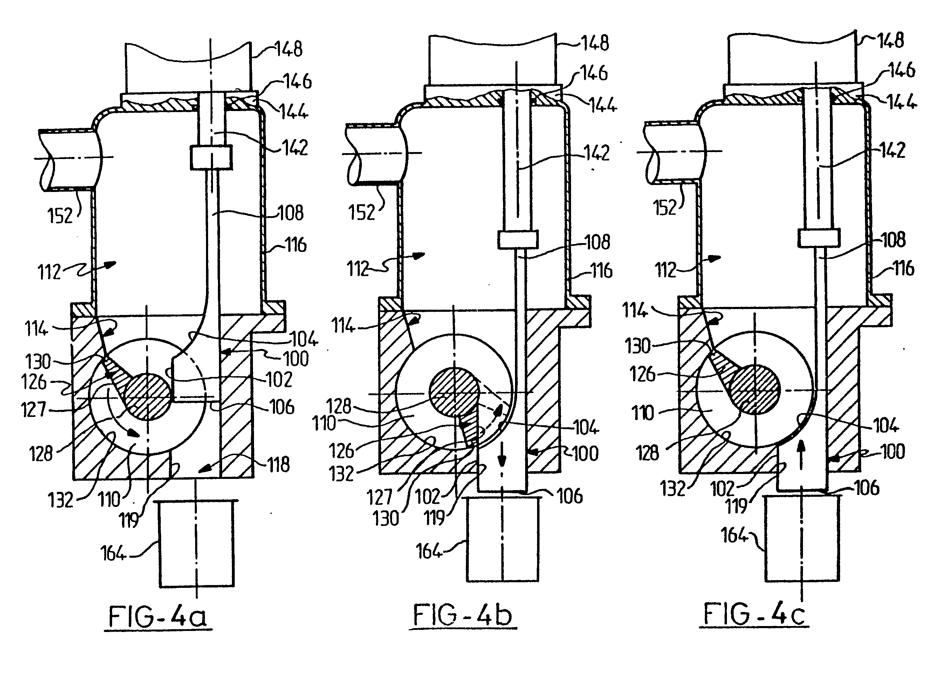

Comme dans la variante précédemment décrite, le dispositif de dosage selon le présent mode de réalisation de l'invention comporte tout d'abord une chambre de dosage cylindrique 110 de section circulaire et d'axe sensiblement horizontal (voir figures 4a à 4c). Cette chambre de dosage 110 est entièrement remplie du produit à doser 112, et ce pendant toutes les phases du dosage. A sa partie supérieure, la chambre de dosage 110 présente une ouverture 114 débouchant dans un réservoir 116 surmontant ladite chambre 110. Le réservoir 116 est également entièrement rempli de produit à doser 112. Ce réservoir peut être monté de façon étanche sur le corps de la chambre de dosage par un moyen approprié quelconque, par exemple par boulonnage, avec interposition de joints d'étanchéité; le réservoir 116 est par ailleurs alimenté en permanence par un bac tampon (non représenté) disposé à un niveau supérieur, la communication étant assurée par l'intermédiaire d'un conduit de raccordement 152 (il est naturellement possible de prévoir un dispositif additionnel surmontant le bac tampon et exerçant sur le produit à doser une légère pression favorisant l'alimentation du réservoir 116). La chambre de dosage 110 communique en outre avec un canal de sortie 118 essentiellement vertical, ménagé en partie basse du dispositif. Il est également prévu une palette 126 qui s'étend radialement le long d'un arbre 128 coaxial à la chambre de dosage 110, ladite palette étant apte à être animée d'un mouvement de rotation d'amplitude contrôlée; au cours de sa rotation, l'extrémité libre 130 de la palette 126 vient balayer la surface intérieure cylindrique 132 de la chambre de dosage 110.

Il est prévu un organé mobile unique 100 qui remplace le volet et le tiroir utilisés dans la variante précédemment décrite, ce qui simplifie notablement la structure du dispositif de dosage, et procure d'autres avantages, ainsi que cela va être décrit ci-après.

L'organe mobile unique 100 peut se déplacer périodiquement entre une position haute d'obturation (figure 4a), dans laquelle une face verticale 102 dudit organe est en contact tangentiel avec l'arbre 128 portant la palette 126, et une position basse de fin de dosage (figure 4b).

L'organe mobile unique 100 est de plus conformé pour permettre, en position basse de celui-ci, le passage de la palette 126, celle-ci poursuivant sa rotation pour revenir dans sa position d'origine: de préférence, ledit organe présente une surface incurvée 104, essentiellement cylindrique, se raccordant à la face verticale 102, ladite surface incurvée étant balayée par l'extrémité libre 130 de la palette 126 lorsque celle-ci revient dans sa position d'origine.

L'organe mobile unique 100 présente ainsi une section s'effilant vers le haut, définissant une portion supérieure 108 qui se raccorde à une tige de commande 142, dont le déplacement assure en outre un certain brassage du produit 112, favorisant ainsi l'alimentation continue par gravité de la chambre de dosage 110. La tige de commande 142 traverse le réservoir 116 par un couvercle supérieur 144 dans lequel sont montés les joints d'étanchéité 146. Au-delà du couvercle 144, la tige se prolonge à l'intérieur d'une chambre stérile 148 destinée à protéger le produit contre toute forme de contamination résultant du coulissement de la tige 142. A l'extérieur de cette chambre stérile 148, l'extrémité de la tige est par exemple couplée à un motoréducteur classique approprié (non représenté), de préférence piloté, comme le moteur d'entraînement de l'arbre porteur de palette, par un calculateur à microprocesseur.

De manière à bien faire comprendre le mode de fonctionnement du dispositif ainsi perfectionné, les figures 4a à 4c illustrent la position de ses principaux organes au cours des étapes essentielles du dosage.

La figure 4a correspond au début du dosage. A ce moment, la palette 126 occupe une position d'origine prédéterminée qui est en regard de la surface intérieure 132 de la chambre de dosage 110; cette position est en relation directe avec la quantité désirée de produit à doser, la position de la figure 4a, au ras de l'ouverture 114 de la chambre 110, correspondant à la dose maximale. L'organe mobile unique 100 est quant à lui en position haute, fermant la chambre de dosage par contact entre la face verticale 102 et l'arbre 128 (le bord inférieur de cette face verticale est de préférence à un niveau inférieur à l'axe de l'arbre, pour être assuré de l'obstruction correcte).

La palette 126 tourne alors d'un angle prédéterminé jusqu'à la position illustrée en figure 4b. L'organe mobile unique 100 coulisse alors vers le bas, garantissant l'éjection complète de la quantité ainsi dosée, par le canal 118, dans un récipient 164; on est assuré de la totalité de l'éjection en prévoyant que la face inférieure 106 arrive à un niveau plus bas que celui de l'orifice de sortie.

Il est intéressant de prévoir que la palette 126 présente une face active 127 se raccordant tangentiellement à l'arbre support 128, cette face active étant, en fin de dosage, essentiellement verticale pour prolonger la paroi correspondante 118 du canal de sortie 118, ainsi qu'illustré en figure 4b. Ainsi, dès l'immobilisation de la palette 126 en position de fin de dosage, l'organe mobile unique 100 coulisse vers le bas, raclant en une seule passe les faces 127 et 118, jusqu'à la position basse dudit organe, pour une éjection complète de la quantité de produit désirée.

La palette 126 peut aussitôt poursuivre sa rotation, l'extrémité 130 de ladite palette raclant la surface incurvée 104 de l'organe mobile unique 100 (position intermédiaire illustrée en pointillés), ce qui évite tout collage de produit sur ladite surface, et diminue la durée du cycle par rapport au dispositif précédemment décrit à volet et tiroir séparés (il faut attendre dans ce cas la remontée complète du volet pour poursuivre la rotation de la palette).

La rotation de la palette 126 est arrêtée lorsque la position angulaire prédéterminée de celle-ci est atteinte (figure 4c), et l'organe mobile unique 100 remonte vers sa position haute d'obturation, la face verticale 102 de celui-ci écartant la portion de produit en excès, de sorte que la quantité à doser reste constante et bien définie au cours des cycles successifs de dosage. On veillera par ailleurs à conférer à la face 102 une hauteur suffisante, pour obturer le passage de sortie de la chambre de dosage 110 au cours de la remontée de l'organe mobile unique 100. Le dispositif se trouve alors de nouveau dans la position de la figure 4a, et l'opération peut recommencer.

Il va de soi que l'on pourrait, comme dans la précédente variante, prévoir plusieurs chambres de dosage adjacentes, par exemple délimitées par des joues solidaires de l'arbre central porteur des palettes associées.

Lorsque l'on utilise le dispositif décrit, le produit à doser se trouve continuellement renouvelé et il est important de noter qu'il n'existe aucun recoin borgne où l'on pourrait observer une stagnation du produit, phénomène tout aussi gênant pour des produits stériles que pour des produits non stériles, ces derniers étant susceptibles de subir alors des dégradations notamment d'origine bactérienne.

La conception même du dispositif permet, sans aucune difficulté, de modifier les doses de produit à délivrer ainsi que le passage d'un type de produit à un type différent.

En effet, lorsque la densité du produit à doser est susceptible de varier en cours d'utilisation, le dispositif décrit permet très facilement d'ajuster le dosage: le produit dosé est délivré dans un récipient 164 qui peut être soit placé directement sur un dispositif de pesage automatique, soit être transféré à un tel dispositif; toutes les variations de poids ainsi enregistrées, suite à des changements de densité, sont ainsi directement transmises à l'ordinateur de commande qui calculera la correction à apporter et transmettra l'information correspondante au motoréducteur commandant la rotation de l'arbre 128. Une telle correction se traduit bien sûr par une modification de l'amplitude de rotation utile de la palette 126 au sein de la chambre de dosage 110.

## Revendications

1. Dispositif de dosage apte à delivrer un volume déterminé de produit, en particulier de produits alimentaires, comprenant:
   - une chambre de dosage cylindrique (10) de section circulaire et d'axe sensiblement horizontal, qui présente à sa partie supérieure une ouverture (14) débouchant dans un réservoir (16) surmontant ladite chambre de dosage et rempli de produit à doser (12), et qui communique avec un canal de sortie (18);
   - une palette (26) s'étendant radialement le long d'un arbre (28) coaxial à la chambre de dosage (10), apte à être animée d'un mouvement de rotation d'amplitude contrôlée, au cours duquel l'extrémité libre (30) de la palette (26) balaie la surface intérieure cylindrique (32) de la chambre de dosage 10);
   ledit dispositif étant caractérisé en ce qu'il comprend en outre:
   - un tiroir (20) qui se déplace périodiquement, dans le canal de sortie (18), entre une position haute d'obturation et une position basse de fin de dosage;
   - un volet (34) mobile en translation apte à pénétrer périodiquement dans la chambre de dosage (10) pour en constituer une paroi en contact tangentiel avec ledit arbre (28), puis à s'en extraire pour autoriser une révolution complète de ladite palette (26),
   et en ce que les mouvements du volet (34), de la palette (26) et du tiroir (20) sont commandés de façon interdépendante.

2. Dispositif selon la revendication 1, caractérisé en ce que la commande interdépendante des mouvements du volet de la palette et du tiroir est réalisée de manière que:
   * en début de dosage:
   - la palette (26) occupe une position d'origine en regard de la surface intérieure cylindrique (32) de la chambre de dosage (10),
   - le volet (34) occupe une position basse de fermeture de la chambre de dosage (10) par contact tangentiel avec l'arbre (28),
   - le tiroir (20) occupe la position haute dans laquelle il obture le canal de sortie (18) juste au-dessus du niveau de la communication (24) entre chambre de dosage (10) et canal de sortie (18);
   * en cours de dosage:
   - le volet (34) reste en position basse,
   - le tiroir (20) reste en position haute, et
   - la palette (26) est animée d'un mouvement de rotation d'amplitude limité prédéterminé, évacuant ainsi au travers du canal de sortie (18) la quantité de produit déplacé par la rotation de la palette (26);
   * en fin de dosage:
   - le volet (34) reste en position basse,
   - la palette (26) reste immobilisée dans sa position de fin de rotation, et
   - le tiroir (20) coulisse en position basse pour évacuer le reste de la quantité de produit dosé se trouvant dans le canal de sortie (18).

3. Dispositif selon l'une des revendications 1 et 2, caractérisé en ce que, entre deux operations successives de dosage:
   * le volet (34) occupe une position haute à l'extérieur de la chambre de dosage (10),
   * la palette (26) poursuit sa rotation pour revenir dans sa position d'origine, puis
   * le volet (34) est ramené dans sa position basse,
   et
   * le tiroir (20) revient en position haute d'obturation.

4. Dispositif selon l'une des revendications 1 à 3, caractérisé en ce que le canal de sortie (18) s'étend selon une direction verticale, et se trouve de préférence agencé au voisinage immédiat de la chambre de dosage (10).

5. Dispositif selon l'une des revendications 1 à 4, caractérisé en ce que la communication entre la chambre de dosage (10) et le canal de sortie (18) est réalisée par l'intermédiaire d'un conduit (24) de préférence incliné par rapport à l'horizontal dans le sens de la rotation de la palette (26).

6. Dispositif selon l'une des revendications 1 à 5, caractérisé en ce que le tiroir (20) se présente sous la forme d'un piston dont les surfaces d'extrémité sont munies d'arêtes coupantes (38).

7. Dispositif selon l'une des revendications 1 à 6, caractérisé en ce que la tige de commande (40) du tiroir (20) présente une section transversale inférieure à celle du canal de sortie (18) de manière à autoriser un refoulement du produit (12) vers le réservoir (16) lorsque ledit tiroir (20) occupe sa position basse.

8. Dispositif selon l'une des revendications 1 à 7, caractérisé en ce que, en position basse, le tiroir (20) dépasse le niveau de l'ouverture du canal de sortie (18).

9. Dispositif selon l'une des revendications 1 à 8, caractérisé en ce que l'extrémité inférieure (36)

du volet (34) est biseautée de manière à définir une arête tranchante qui en position basse du volet (34), dépasse sensiblement la ligne de contact tangentiel avec l'arbre (28).

10. Dispositif selon l'une des revendications 1 à 9, caractérisé en ce que les tiges de commande du volet (42) et du tiroir (40) traversent le réservoir (16) de produit.

11. Dispositif selon l'une des revendications 1 à 10, caractérisé en ce que le réservoir (16) est alimenté en permanence par un bac tampon (50) disposé a un niveau supérieur à celui du réservoir (16).

12. Dispositif selon l'une des revendications 1 à 11, caractérisé en ce que les mouvements du volet (34), de la palette (26) et du tiroir (20), sont réalisés par des motoréducteurs pilotés par un calculateur à microprocesseur.

13. Dispositif selon la revendication 1, caractérisé par le fait que le volet et le tiroir sont réalisés en un organe mobile unique (100) pouvant se déplacer périodiquement entre une position haute d'obturation dans laquelle une face verticale (102) dudit organe est en contact tangentiel avec l'arbre (128) portant la palette (126), et une position basse de fin de dosage, ledit organe mobile étant par ailleurs conformé pour permettre, dans ladite position basse, le passage de la palette (126) poursuivant sa rotation pour revenir dans sa position d'origine.

14. Dispositif selon la revendication 13, caractérisé par le fait que l'organe mobile unique (100) présente une surface incurvée (104), sensiblement cylindrique, se raccordant à la face verticale, ladite surface incurvée étant balayée par l'extrémité libre (130) de la palette (126) lorsque celle-ci revient dans sa position d'origine.

15. Dispositif selon l'une des revendications 13 et 14, caractérisé par le fait que la palette (126) présente une face active (127) se raccordant tangentiellement à l'arbre support (128), ladite face active étant, en fin de dosage, essentiellement verticale pour prolonger la paroi correspondante (119) du canal de sortie (118).

16. Dispositif selon l'une des revendications 13 à 15, caractérisé par le fait que, en position basse, l'organe mobile unique (100) dépasse le niveau de l'ouverture du canal de sortie (118).

17. Dispositif selon l'une des revendications à 16, caractérisé par le fait que la tige de commande (108, 142) de l'organe mobile unique (100) traverse le réservoir de produit (116).

18. Dispositif selon l'une des revendications 13 à 17, caractérisé par le fait que les mouvements de la palette (126) et de l'organe mobile unique (100) sont réalisés par des motoréducteurs pilotés par un calculateur à microprocesseur.

19. Dispositif selon l'une des revendication, 13 à 18, caractérisé par le fait que la commande interdépendante des mouvements de la palette (126) et de l'organe mobile unique (100) est réalisée de manière que:

- en début de dosage: la palette (126) occupe une position d'origine prédéterminée en regard de la surface intérieure cylindrique (132) de la chambre de dosage (110), et l'organe mobile unique (100) est en position haute d'obturation, dans laquelle sont assurées d'une part la fermeture de la chambre de dosage (110) par contact tangentiel avec l'arbre (128), et d'autre part la communication entre chambre de dosage (110) et canal de sortie (118);

- en cours de dosage: l'organe mobile unique (100) reste en position haute d'obturation, tandis que la palette (126) est animée d'un mouvement de rotation d'amplitude prédéterminée évacuant ainsi au travers du canal de sortie la quantité de produit correspondante;

- en fin de dosage: la palette (126) est immobilisée dans sa position de fin de rotation, puis l'organe mobile unique (100) coulisse en position basse pour terminer l'évacuation du produit, et laisser la palette (126) poursuivre sa rotation jusqu'à sa position d'origine.

20. Dispositif selon la revendication 19, caractérisé par le fait que, en fin de dosage, la palette (126) est immobilisée dans une position telle que sa face active (127) soit verticale, ladite face active pouvant alors être raclée au coulissement de l'organe mobile unique (100) vers la position basse de celui-ci.

21. Dispositif selon l'une des revendications 19 et 20, caractérisé par le fait que, entre deux opérations successives de dosage, le retour de l'organe mobile unique (100) en position haute d'obturation n'est réalisé que lorsque la palette (126) a atteint sa position d'origine prédéterminée.

**Patentansprüche**

1. Dosiervorrichtung, die geeignet ist, ein bestimmtes Volumen eines Produkts, insbesondere von Nahrungsmittelprodukten, zu liefern, mit:
- einer zylindrischen Dosierkammer (10) mit kreisförmigem Querschnitt und einer im wesentlichen horizontalen Achse, welche Kammer an ihrem oberen Teil eine Öffnung (14) aufweist, die in ein Reservoir (16) mündet, welches höher ist als die genannte Dosierkammer und mit dem zu dosierenden Produkt (12) gefüllt ist, und welche Dosierkammer mit einem Ausgangskanal (18) verbunden ist;
- einer Palette (26), die sich radial von einer zur Dosierkammer (10) koaxialen Welle (28) erstreckt, welche Palette geeignet ist, von einer Rotationsbewegung von kontrollierter Amplitude angetrieben zu werden, in deren Verlauf das freie Ende (30) der Palette (26) die innere zylindrische Oberfläche (32) der Dosierkammer (10) überstreicht;

dadurch gekennzeichnet, daß die genannte Vorrichtung ferner umfaßt:
- einen Einschub (28), der sich zwischen einer hohen Position zum Verschließen und einer tiefen Position des Dosierungsendes, periodisch in den Ausgangskanal (18) verschiebt;

- einen durch Verschiebung beweglichen Schieber (34), welcher geeignet ist, in die Dosierkammer (10) periodisch einzudringen, um so eine Wand zu bilden, welche mit der genannten Welle (28) tangential in Berührung ist, und sich dann herauszuziehen, um eine vollständige Umdrehung der genannten Palette (26) zu ermöglichen,

und dadurch, daß die Bewegungen des Schiebers (34), der Palette (26) und des Einschubs (20) voneinander abhängig gesteuert werden.

2. Vorrichtung nach Anspruch 1, dadurch gekennzeichnet, daß die voneinander abhängige Steuerung der Bewegungen des Schiebers, der Palette und des Einschubs so erfolgt, daß:

* zu Beginn der Dosierung:
- die Palette (26) eine Anfangsposition in Bezug auf die innere zylindrische Oberfläche (32) der Dosierkammer (10) einnimmt,
- der Schieber (34) eine tiefe Position zum Verschließen der Dosierkammer (10) durch tangentiale Berührung mit der Welle (28) einnimmt,
- der Einschub (20) die hohe Position einnimmt, in welcher er den Ausgangskanal (18), gerade oberhalb des Niveaus der Verbindung (24) zwischen Dosierkammer (10) und Ausgangskanal (18), absperrt;

* während der Dosierung:
- der Schieber (34) in tiefer Position bleibt,
- der Einschub (20) in hoher Position bleibt, und
- die Palette (26) von einer Rotationsbewegung von vorbestimmter begrenzter Amplitude angetrieben wird, wobei auf diese Weise die durch die Rotation der Palette (26) verschobene Produktmenge durch den Ausgangskanal (18) abgeführt wird;

* am Ende der Dosierung:
- der Schieber (34) in tiefer Position bleibt,
- die Palette (26) unbeweglich in ihrer Position des Endes der Rotation bleibt, und
- der Einschub (20) in tiefe Position gleitet, um den Rest der dosierten Produktmenge, der sich in dem Ausgangskanal (18) befindet, abzuführen.

3. Vorrichtung nach einem der Ansprüche 1 und 2, dadurch gekennzeichnet, daß zwischen zwei aufeinanderfolgenden Dosierungsvorgängen:

* der Schieber (34) eine hohe Position außerhalb der Dosierkammer (10) einnimmt,
* die Palette (26) ihre Rotation fortsetzt, um in ihre Anfangsposition zurückzukehren, dann
* der Schieber (34) in seine tiefe Position zurückgeführt wird, und
* der Einschub (20) in die hohe Position zum Verschließen zurückkehrt.

4. Vorrichtung nach einem der Ansprüche 1 bis 3, dadurch gekennzeichnet, daß der Ausgangskanal (18) sich in einer vertikalen Richtung erstreckt, und sich vorzugsweise in direkter Nachbarschaft der Dosierkammer (10) befindet.

5. Vorrichtung nach einem der Ansprüche 1 bis 4, dadurch gekennzeichnet, daß die Verbindung zwischen der Dosierkammer (10) und dem Ausgangskanal (18) mittels eines Übergangs (24) erfolgt, welcher vorzugsweise in Bezug auf die Horizontale in Richtung der Rotation der Palette (26) geneigt ist.

6. Vorrichtung nach einem der Ansprüche 1 bis 5, dadurch gekennzeichnet, daß der Einschub (20) die Form eines Kolbens aufweist, dessen Oberflächen der Enden mit Schneidekanten (38) versehen sind.

7. Vorrichtung nach einem der Ansprüche 1 bis 6, dadurch gekennzeichnet, daß die Steuerstange (40) des Einschubs (20) einen Querschnitt aufweist, der kleiner ist als derjenige des Ausgangskanals (18), um so ein Zurückströmen des Produkts (12) in Richtung auf das Reservoir (16) zu gestatten, wenn der genannte Einschub (20) seine tiefe Position einnimmt.

8. Vorrichtung nach einem der Ansprüche 1 bis 7, dadurch gekennzeichnet, daß der Einschub (20), in tiefer Position, aus der Öffnungsebene des Ausgangskanals (18) herausragt.

9. Vorrichtung nach einem der Ansprüche 1 bis 8, dadurch gekennzeichnet, daß das untere Ende (36) des Schiebers (34) so abgeschrägt ist, daß es eine scharfe Kante bildet, welche, in tiefer Position des Schiebers (34), über die Linie der tangentialen Berührung mit der Welle (28) im wesentlichen hinausragt.

10. Vorrichtung nach einem der Ansprüche 1 bis 9, dadurch gekennzeichnet, daß die Steuerstangen des Schiebers (42) und des Einschubs (40) das Reservoir (16) des Produktes durchqueren.

11. Vorrichtung nach einem der Ansprüche 1 bis 10, dadurch gekennzeichnet, daß das Reservoir (16) permanent von einem Behälter (50) gespeist wird, der auf einem Niveau oberhalb desjenigen des Reservoirs (16) angebracht ist.

12. Vorrichtung nach einem der Ansprüche 1 bis 11, dadurch gekennzeichnet, daß die Bewegungen des Schiebers (34), der Palette (26) und des Einschubs (20) durch Motorreduktionsgetriebe realisiert werden, welche von einem Mikroprozessorrechner gesteuert werden.

13. Vorrichtung nach Anspruch 1, dadurch gekennzeichnet, daß der Schieber und der Einschub als ein einziges bewegliches Organ (100) realisiert sind, welches sich zwischen einer hohen Position zum Verschließen, in welcher eine vertikale Seite (102) des genannten Organs in tangentialer Berührung mit der die Palette (126) tragenden Welle (128) ist, und einer tiefen Position des Dosierungsendes verschiebt, wobei das genannte bewegliche Organ außerdem so gebildet ist, daß es in der genannten tiefen Position die Passage der Palette (126) erlaubt, die ihre Rotation fortsetzt, um in ihre Anfangsposition zurückzukehren.

14. Vorrichtung nach Anspruch 13, dadurch gekennzeichnet, daß das einzige bewegliche Organ (100) eine gekrümmte, im wesentlichen zylindrische Oberfläche (104) aufweist, die an die vertikale Seite anschließt, und die genannte gekrümmte Oberfläche von dem freien Ende (130) der Palette (126) überstrichen wird, wenn diese in ihre Anfangsposition zurückkehrt.

15. Vorrichtung nach einem der Ansprüche 13 und 14, dadurch gekennzeichnet, daß die Palette (126) eine aktive Seite (127) aufweist, die sich tantential an die Trägerwelle (128) anschließt, wobei die genannte aktive Seite am Ende der Dosierung im wesentlichen vertikal ist, um die entsprechende Wand (119) des Ausgangskanals (118) zu verlängern.

16. Vorrichtung nach einem der Ansprüche 13 bis 15, dadurch gekennzeichnet, daß das einzige bewegliche Organ (100) in tiefer Position aus dem Niveau der Öffnung des Ausgangskanals (118) herausragt.

17. Vorrichtung nach einem der Ansprüche 13 bis 16, dadurch gekennzeichnet, daß die Steuerstange (108, 142) des einzigen beweglichen Organs (100) das Reservoir (116) des Produkts durchquert.

18. Vorrichtung nach einem der Ansprüche 13 bis 17, dadurch gekennzeichnet, daß die Bewegungen der Palette (126) und des einzigen beweglichen Organs (100) durch Motorreduktionsgetriebe realisiert werden, welche durch einen Mikroprozessorrechner gesteuert werden.

19. Vorrichtung nach einem der Ansprüche 13 bis 18, dadurch gekennzeichnet, daß die voneinander abhängige Steuerung der Bewegungen der Palette (126) und des einzigen beweglichen Organs (100) so realisiert wird, daß:
- zu Beginn der Dosierung: die Palette (126) eine in Bezug auf die innere zylindrische Oberfläche (132) der Dosierkammer (110) vorbestimmte Anfangsposition einnimmt und das einzige bewegliche Organ (100) in hoher Position zum Verschließen ist, in welcher einerseits die Absperrung der Dosierkammer (110) durch tangentiale Berührung mit der Welle (128) und andererseits die Verbindung zwischen Dosierkammer (110) und Ausgangskanal (118) gesichert sind;
- während der Dosierung: das einzige bewegliche Organ (100) in hoher Position zum Verschließen bleibt, während die Palette (126) von einer Rotationsbewegung mit vorbestimmter Amplitude angetrieben wird, so daß die entsprechende Produktmenge durch den Ausgangskanal abgeführt wird;
- am Ende der Dosierung: die Palette (126) in ihrer Position des Rotationsendes unbeweglich ist, dann das einzige bewegliche Organ (100) in tiefe Position gleitet, um das Abführen des Produktes zu beenden, und um die Palette (126) ihre Rotation bis zu ihrer Anfangsposition fortsetzen zu lassen.

20. Vorrichtung nach Anspruch 19, dadurch gekennzeichnet, daß die Palette (126) am Ende der Dosierung in einer Position unbeweglich gemacht ist, derart, daß ihre aktive Seite (127) vertikal sei, und die genannte aktive Seite dann beim Gleiten des einzigen beweglichen Organs (100) in Richtung auf seine tiefe Position abgeschabt werden kann.

21. Vorrichtung nach einem der Ansprüche 19 und 20, dadurch gekennzeichnet, daß zwischen zwei aufeinanderfolgenden Dosiervorgängen die Rückkehr des einzigen beweglichen Organs (100) in hohe Position zum Verschließen nur erfolgt, wenn die Palette (126) ihre vorbestimmte Anfangsposition erreicht hat.

**Claims**

1. A metering device capable of delivering a determined volume of product, in particular foodstuffs, comprising:
- a cylindrical metering chamber (10) of circular section and with an approximately horizontal axis, which, in its upper part, has an aperture (14) opening out into a reservoir (16) surmounting the said metering chamber and filled with product to be metered (12), and which communicates with an outlet channel (18);
- a vane (26) extending radially along a shaft (28) coaxial to the metering chamber (10), and capable of being driven with a rotary movement of controlled amplitude, during which the free end (30) of the vane (26) sweeps the cylindrical internal surface (32) of the metering chamber (10); and the device being characterized in that it further comprises:
- a slide valve (20) which moves periodically in the outlet channel (18), between a high closing position and a low end-of-metering position;
- a flap (34) capable of translational movement and of entering the metering chamber (10) periodically to form a wall in tangential contact with the said shaft (28), and then withdrawing to allow a complete revolution of the said vane (26), and wherein the movements of the flap (34), vane (26) and slide valve (20) are controlled interdependently.

2. The device as claimed in claim 1, wherein the interdependent control of the movements of the flap, vane and slide valve is effected in such a way that:
* at the start of metering:
- the vane (26) occupies a starting position facing the cylindrical internal surface (32) of the metering chamber (10),
- the flap (34) occupies a low position in which it closes the metering chamber (10) by tangential contact with the shaft (28), and
- the slide valve (20) occupies the high position in which it closes the outlet channel (18) just above the level of the communication (24) between the metering chamber (10) ant the outlet channel (18);
* during metering:
- the flap (34) remains in the low position,
- the slide valve (20) remains in the high position, and
- the vane (26) is driven with a rotary movement of predetermined limited amplitude, thus discharging through the outlet channel (18), the quantity of product displaced by the rotation of the vane (26); and

* at the end of metering:
- the flap (34) remains in the low position,
- the vane (26) remains immobilized in its end-of-rotation position, and
- the slide valve (20) slides into the low position to discharge the remainder of the quantity of metered product present in the outlet channel (18).

3. The device as claimed in claim 1 or 2, wherein, between two successive metering operations:
- the flap (34) occupies a high position outside the metering chamber (10),
- the vane (26) continues to rotate so as to return to its starting position, then
- the flap (34) is brought back to its low position, and
- the slide valve (20) returns to the high closing position.

4. The device as claimed in anyone of claims 1 to 3, wherein the outlet channel (18) runs in a vertical direction and is preferably located in the immediate vicinity of the metering chamber (10).

5. The device as claimed in anyone of claims 1 to 4, wherein the communication between the metering chamber (10) and the outlet channel (18) is formed by means of a duct (24), which is preferably inclined relative to the horizontal in the direction of rotation of the vane (26).

6. The device as claimed in anyone of claims 1 to 5, wherein the slide valve (20) is in the form of a piston whose end surfaces are provided with cutting edges (38).

7. The device as claimed in anyone of claims 1 to 6, wherein the control rod (40) of the slide valve (20) has a smaller cross-section than the outlet channel (18) so that the product (12) can be forced back towards the reservoir (16) when the said slide valve (20) occupies its low position.

8. The device as claimed in anyone of claims 1 to 7, wherein, in the low position, the slide valve (20) goes beyond the level of the aperture in the outlet channel (18).

9. The device as claimed in anyone of claims 1 to 8, wherein the lower end (36) of the flap (34) is beveled so as to define a cutting edge which, in the low position of the flap (34), goes substantially beyond the line of tangential contact with the shaft (28).

10. The device as claimed in anyone of claims 1 to 9, wherein the control rod (42) of the flap and the control rod (40) of the slide valve pass through the product reservoir (16).

11. The device as claimed in anyone of claims 1 to 10, wherein the reservoir (16) is continuously fed by a buffer tank (50) located at a higher level than the reservoir (16).

12. The device as claimed in anyone of claims 1 to 11, wherein the movements of the flap (34), the vane (26) and the slide valve (20) are caused by motorized reduction gears governed by a computer of the microprocessor type.

13. The device as claimed in claim 1, wherein the flap and the slide valve are made as a single moving component (100) capable of moving periodically between a high closing position, in which a vertical face (102) of the said component is in tangential contact with the shaft (128) carrying the vane (126), and a low end-of-metering position, the said moving component furthermore being shaped so that, in the said low position, the vane (126), which is continuing to rotate, can pass through and return to its starting position.

14. The device as claimed in claim 13, wherein the single moving component (100) has an approximately cylindrical, incurved surface (104) connected to the vertical face, the said incurved surface being swept by the free end (130) of the vane (126) as the latter returns to its starting position.

15. The device as claimed in claim 13 or 14, wherein the vane (126) has an active face (127) connected tangentially to the bearing shaft (128), the said active face being essentially vertical at the end of metering so as to extend the corresponding wall (119) of the outlet channel (118).

16. The device as claimed in anyone of claims 13 to 15, wherein, in the low position, the single moving component (100) goes beyond the level of the aperture in the outlet channel (118).

17. The device as claimed in anyone of claims 13 to 16, wherein the control rod (108, 142) of the single moving component (100) passes through the product reservoir (116).

18. The device as claimed in anyone of claims 13 to 17, wherein the movements of the vane (126) and the single moving component (100) are caused by motorized reduction gears governed by a computer of the microprocessor type.

19. The device as claimed in anyone of claims 13 to 18, wherein the interdependent control of the movements of the vane (126) and the single moving component (100) is effected so that:
- at the start of metering: the vane (126) occupies a predetermined starting position facing the cylindrical internal surface (132) of the metering chamber (110), and the single moving component (100) is in the high closing position, ensuring on the one hand the closing of the metering chamber (110) by tangential contact with the shaft (128) and on the other hand the communication between the metering chamber (110) and the outlet channel (118);
- during metering: the single moving component (100) remains in the high closing position while the vane (126) is driven with a rotary movement of predetermined amplitude, thus discharging the corresponding quantity of product through the outlet channel; and
- at the end of metering: the vane (126) is immobilized in its end-of-rotation position and the single moving component (100) then slides into the low position to finish discharging the product ant to allow the vane (126) to continue rotating up to its starting position.

20. The device as claimed in claim 19, wherein, at the end of metering, the vane (126) is immobilized in such a position that its active face (127) is vertical, it then being possible for the said active face to be scraped as the single moving component (100) slides towards its low position.

21. The device as claimed in claim 19 or 20, wherein, between two successive metering operations, the single moving component (100) does not return to its high closing position until the vane (126) has reached its predetermined starting position.

FIG_2

FIG_1

EP 0 192 517 B1

FIG_3a    FIG_3b    FIG_3c    FIG_3d

EP 0 192 517 B1

FIG-4a        FIG-4b        FIG-4c

EP 0 192 517 B1